# EUROPÄISCHE PATENTANMELDUNG

(11) **EP 0 841 224 A1**
(43) Veröffentlichungstag der Anmeldung: **13.05.1998**
(21) Anmeldenummer: 97119452.7
(22) Anmeldetag: 06.11.1997
(51) Int. Cl.: B60R 21/20

(54) **Airbag-Anordnung**

(30) Priorität: 08.11.1996 DE 19646204
(71) Anmelder: TAKATA (EUROPE) VEHICLE SAFETY TECHNOLOGY GmbH, D-89081 Ulm (DE)
(72) Erfinder: Klingauf, Gerhard, 88481 Balzheim (DE); Mitzkus, Jürgen, 89275 Elchingen (DE)
(74) Vertreter: Schmidt, Christian

(57) **Zusammenfassung**

Eine Airbag-Anordnung weist einen Luftsack (10), einen Gasgenerator (12) und ein Haltemittel (14) auf, das den Luftsack (10) mit dem Gasgenerator (12) verbindet. Das Haltemittel (14) besteht zumindest teilweise aus einem nicht metallischen Verbundwerkstoff.

## Beschreibung

Die vorliegende Erfindung betrifft eine Airbag-Anordnung nach dem Oberbegriff des Anspruchs 1.

Eine derartige Anordnung ist aus der DE 44 25 495 A1 bekannt und dient dazu, den Luftsack druckdicht mit dem Gasgenerator zu verbinden. Bei dieser bekannten Anordnung besteht das Haltemittel aus einer Generatorhalteplatte, in deren Mitte der Gasgenerator befestigt ist. Der untere Flansch einer Abdeckung der Airbag-Anordnung ist dabei mit der Generatorhalteplatte zusammengefügt, wobei der Luftsack im Fügebereich angeordnet ist. Hierdurch ist der Luftsack in seinem Öffnungsbereich zwischen der Generatorhalteplatte und dem Flansch der Abdeckung druckdicht geklemmt.

Es ist das der vorliegenden Erfindung zugrundeliegende Problem (Aufgabe), eine Airbag-Anordnung der eingangs genannten Art zu schaffen, die leichtgewichtig ist und kostengünstig hergestellt werden kann.

Die Lösung dieser Aufgabe erfolgt durch die Merkmale des Anspruchs 1 und insbesondere dadurch, daß das Haltemittel zumindest teilweise aus einem nichtmetallischen Verbundwerkstoff besteht. Überraschenderweise hat sich nämlich herausgestellt, daß - entgegen der bislang bestehenden Vorurteile - ein Haltemittel aus einem nichtmetallischen Verbundwerkstoff, beispielsweise GFK, CFK, Kevlar oder dergleichen, zur Halterung des Gasgenerators und des Luftsackes außergewöhnlich gut geeignet ist und die entstehenden Kräfte problemlos aufnimmt.

Aufgrund der hohen Zugfestigkeit des Verbundwerkstoffes und dessen geringen Gewichtes ist eine Airbag-Anordnung geschaffen, die stabil und dennoch leichtgewichtig ist.

Durch die Wahl eines nichtmetallischen Verbundwerkstoffes als Haltemittel ergibt sich darüber hinaus die Möglichkeit, den Luftsack, der aus einem Kunstfasergewebe besteht, bereits bei der Herstellung des Haltemittels mit dem Haltemittel zu verbinden. Hierdurch können aufwendige Füge- oder Nietvorgänge entfallen, die bislang nötig waren, um den Luftsack druckdicht mit dem Haltemittel zu verbinden. Da auch das Luftsackgewebe ein nichtmetallischer Werkstoff ist, läßt sich - verglichen mit metallischen Haltemitteln - auf einfachere Weise eine Verbindung zwischen dem Luftsack und dem Haltemittel herstellen.

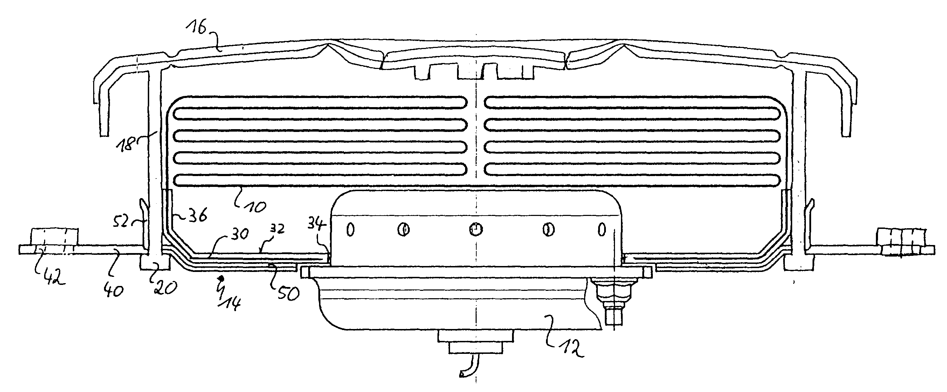

Bevorzugte Ausführungsformen der Erfindung sind in der Beschreibung, der Zeichnung und den Unteransprüchen beschrieben.

Nach einer bevorzugten Ausführungsform der Erfindung ist der Luftsack zumindest teilweise in das Haltemittel eingebettet. Diese Art der Verbindung hat sich als besonders vorteilhaft erwiesen, da hierdurch eine besonders gute Verbindung zwischen Luftsack und Haltemittel geschaffen ist. Der Luftsack ist in seinem Öffnungsbereich direkt an das Haltemittel angebunden, so daß nach Einsetzen des Gasgenerators in das Haltemittel eine kompakte Airbag-Anordnung geschaffen ist, die aus nur zwei Bauteilen besteht, nämlich dem Gasgenerator und dem Haltemittel mit im Verbindungsbereich eingebettetem Luftsack.

Nach einer weiteren vorteilhaften Ausführungsform der Erfindung ist der Luftsack sandwichartig zwischen zwei Schichten des Verbundwerkstoffes eingebettet. Bei dieser Ausführungsform ergibt sich eine besonders feste Verbindung zwischen dem Öffnungsbereich des Luftsackes und dem Haltemittel. Bei der Herstellung kann der Luftsack in seinem Öffnungsbereich zwischen zwei Laminatschichten des Verbundwerkstoffes überlappend eingebettet werden, wobei das den Verbundstoff bildende Harz eine Verbindung zwischen dem Luftsack und dem Haltemittel bildet.

Um eine besonders stabile Verbindung zwischen Luftsack und Haltemittel zu erzielen, kann der Luftsack und/oder eine Schicht des Verbundwerkstoffes im Einbettungsbereich mit Durchdringungen versehen sein. Hierdurch kann das Harz vor dem Trocknen bzw. Härten sowohl den Luftsack wie auch die einzelnen Laminatschichten des Verbundwerkstoffes durchdringen.

Der Verbundwerkstoff kann ein thermoplastisches Kompositmaterial sein, das durch thermoplastisches Harz gebunden ist. In bestimmten Anwendungsfällen kann jedoch auch ein duroplastisches Material vorteilhaft sein, da dieses nur einmal thermisch verformbar ist. Bevorzugt ist als Verbundwerkstoff ein Faser-Verbundwerkstoff, beispielsweise GFK oder CFK. Es sind jedoch auch Materialien wie Kevlar oder Aramid möglich.

Besonders vorteilhaft ist es, wenn der Luftsack und der Verbundwerkstoff aus dem gleichen Verbundmaterial, beispielsweise Polyamid bestehen. In diesem Fall läßt sich der Luftsack aus PA 4.6 und das Haltemittel aus PA 6.6 fertigen, was die gegenseitige Verbindung dieser beiden Teile begünstigt.

Nach einer weiteren Ausführungsform der Erfindung kann das Haltemittel Einrichtungen zur Befestigung einer Abdeckung und/oder Einrichtungen zur Befestigung der Airbag-Anordnung an einem fahrzeugfesten Teil aufweisen. Hierdurch kann das leichtgewichtige Haltemittel gleichzeitig dazu herangezogen werden, die Abdeckung zu befestigen und die ganze Airbag-Anordnung an einem fahrzeugfesten Teil zu montieren.

Besonders vorteilhaft ist es, wenn das Haltemittel eine Grundplatte mit einer Öffnung zur Befestigung des Gasgenerators und einen Randbereich aufweist, der sich im wesentlichen rechtwinklig zu der Grundplatte erstreckt. Hierdurch läßt sich der Luftsack ohne Falten direkt an das Haltemittel anbinden. Hierbei kann es ausreichend sein, wenn der Luftsack nur innerhalb des Randbereiches in das Haltemittel eingebettet ist. Für eine besonders zugfeste Verbindung ist jedoch der Luftsack sowohl im Bereich des Randbereiches wie auch im Bereich der Grundplatte in das Haltemittel eingebettet.

Nachfolgend wird die vorliegende Erfindung anhand einer bevorzugten Ausführungsform rein beispielhaft und unter Bezugnahme auf die beigefügte Zeichnung beschrieben.

Die Figur zeigt eine teilweise geschnittene Ansicht der erfindungsgemäßen Airbag-Anordnung.

Die in der Figur dargestellte Airbag-Anordnung weist einen Luftsack 10, einen Gasgenerator 12, ein Haltemittel 14 und eine Abdeckung 16 auf. Wie gut zu erkennen ist, verbindet das Haltemittel 14 den Luftsack 10 mit dem Gasgenerator 12 und lagert gleichzeitig den Gasgenerator 12 in einer mittig angeordneten Öffnung, in der dieser befestigt ist. Die Abdeckung 16, die auf übliche Weise mit Sollbruchstellen versehen ist, weist einen umlaufenden Flansch 18 auf, der an einzelnen angeformten Stegen durch Öffnungen in dem Haltemittel 14 hindurchgeführt ist. Die überstehenden Enden dieser Stege sind thermisch verformt, wodurch sich eine Verbreiterung 20 am Ende der Stege ergibt, welche die Abdeckung 16 mit dem Haltemittel 14 verbindet.

Wie die Figur zeigt, weist das Haltemittel 14 ein Trägerelement 30 auf, das eine Grundplatte 32 mit einer Öffnung 34 zur Befestigung des Gasgenerators 12 sowie einen Randbereich 36 aufweist, der sich im wesentlichen rechtwinklig zu der Grundplatte 32 erstreckt. Das Trägerelement 30 besteht aus einem nichtmetallischem Verbundwerkstoff und ist in seinem Randbereich 36 wie auch im Bereich seiner Grundplatte 32 einstückig mit dem Luftsack 10 verbunden. Hierzu ist der Öffnungsbereich des Luftsackes 10 sandwichartig zwischen zwei Schichten des Verbundwerkstoffes des Trägerelements 30 eingebettet. Um eine gegenseitige Verbindung zwischen Luftsack 10 und Trägerelement 30 zu begünstigen, weist der Luftsack 10 im Überlappungsbereich nicht dargestellte Durchdringungen auf, die ein Durchfließen des Harzes erleichtern.

Das Haltemittel 14 weist ferner ein Befestigungselement 50 und eine Halteplatte 40 auf, die in dieser Reihenfolge an der Unterseite des Trägerelementes 30 angeordnet sind. Die Halteplatte 40 und das Befestigungselement 50 sind aus dem gleichen Verbundwerkstoff wie das Trägerelement 30 hergestellt, können jedoch auch aus einem metallischen Werkstoff bestehen.

Das Befestigungselement 50 besitzt an seinem Umfangsbereich einen sich im wesentlichen rechtwinklig erstreckenden Flansch 52, der den Flansch 18 der Abdeckung 16 zwischen sich und dem Randbereich 36 des Trägerelementes 30 aufnimmt.

Die Halteplatte 40 erstreckt sich radial über den Flansch 52 hinaus und weist an ihrem Außenumfang Befestigungsmittel 42 auf, um die Airbag-Anordnung fahrzeugfest zu montieren.

Im vorliegenden Ausführungsbeispiel umfaßt das Haltemittel 14 das Trägerelement 30, die Halteplatte 40 und das Befestigungselement 50, die als separate Teile ausgebildet sind. Das Haltemittel 14 kann jedoch auch einstückig ausgebildet sein.

Auch ist es ausreichend, wenn lediglich das Trägerelement 30 aus dem nichtmetallischen Verbundwerkstoff besteht, da dieses die direkte Anbindung zwischen Gasgenerator 12 und Luftsack 10 herstellt. Auch ist es im Einzelfall nicht unbedingt erforderlich, das Gewebe des Luftsackes 10 sandwichartig in den Verbundwerkstoff des Haltemittels einzubinden. Vielmehr kann das Haltemittel auch vorgefertigt und anschließend erhitzt werden, woraufhin das Luftsackgewebe unter Druck in das Haltemittel eingepreßt wird. Es ist jedoch auch möglich, den Randbereich des Luftsackes bereits bei der Herstellung des Haltemittels in eine Form miteinzulegen.

Schließlich kann es vorteilhaft sein, das Luftsackgewebe als eine Laminatschicht in das Grundmaterial des Haltemittels einzulegen und erst nach dem Durchstanzen der Öffnung 34 für den Gasgenerator 12 und nach einem eventuellen Tiefziehvorgang den Luftsack zusammenzunähen. Da in jedem Fall das Gewebe des Luftsackes sowie das Gewebe des Verbundwerkstoffes eine hohe Zugfestigkeit aufweisen und diese beiden Gewebeschichten durch das verbindende Harz fest miteinander verbunden sind, wird insgesamt eine Anordnung erzielt, die den hohen Anforderungen genügt.

## Patentansprüche

1. Airbag-Anordnung mit
- einem Luftsack (10),
- einem Gasgenerator (12), und
- einem Haltemittel (14, 30, 40, 50), das den Gasgenerator (12) lagert und den Luftsack (10) mit dem Gasgenerator (12) verbindet,
dadurch **gekennzeichnet,** daß das Haltemittel (14, 30, 40, 50) zumindest teilweise aus einem nichtmetallischen Verbundwerkstoff besteht.

2. Anordnung nach Anspruch 1,
dadurch **gekennzeichnet,** daß der Luftsack (10) zumindest teilweise in das Haltemittel (30) eingebettet ist.

3. Anordnung nach Anspruch 2,
dadurch **gekennzeichnet,** daß der Luftsack (10) sandwichartig zwischen zwei Schichten des Verbundwerkstoffes eingebettet ist.

4. Anordnung nach Anspruch 2 oder 3,
dadurch **gekennzeichnet,** daß der Luftsack (10) und/oder eine Schicht des Verbundwerkstoffes im Einbettungsbereich mit Durchdringungen versehen ist.

5. Anordnung nach zumindest einem der vorstehenden Ansprüche,
dadurch **gekennzeichnet,** daß der Verbundwerkstoff ein Thermoplast oder ein Duroplast ist.

6. Anordnung nach zumindest einem der vorstehenden Ansprüche,
dadurch **gekennzeichnet,** daß der Verbundwerkstoff ein Faser-Verbundwerkstoff, vorzugsweise GFK oder CFK ist.

7. Anordnung nach zumindest einem der vorstehenden Ansprüche,
dadurch **gekennzeichnet,** daß der Luftsack (10) und der Verbundwerkstoff aus dem gleichen Grundmaterial, vorzugsweise Polyamid, bestehen.

8. Anordnung nach zumindest einem der vorstehenden Ansprüche,
dadurch **gekennzeichnet,** daß das Haltemittel (14, 40, 50) Einrichtungen zur Befestigung einer Abdeckung (16) und/oder Einrichtungen (42) zur Befestigung der Anordnung an einem fahrzeugfesten Teil aufweist.

9. Anordnung nach zumindest einem der vorstehenden Ansprüche,
dadurch **gekennzeichnet,** daß das Haltemittel (14, 30) eine Grundplatte (32) mit einer Öffnung (34) zur Befestigung des Gasgenerators (12) und einen Randbereich (36) aufweist, der sich im wesentlichen rechtwinklig zu der Grundplatte (32) erstreckt.

10. Anordnung nach Anspruch 9,
dadurch **gekennzeichnet,** daß der Luftsack (10) nur im Bereich des Randbereiches (36) in das Haltemittel (30) eingebettet ist.

11. Anordnung nach Anspruch 9,
dadurch **gekennzeichnet,** daß der Luftsack (10) sowohl im Bereich des Randbereiches (36) wie auch im Bereich der Grundplatte (32) in das Haltemittel (30) eingebettet ist.
